# EUROPEAN PATENT SPECIFICATION

(11) **EP 0 626 054 B1**
(45) Date of publication and mention of the grant of the patent: **27.03.1996**
(21) Application number: 92905323.9
(22) Date of filing: 21.02.1992
(51) Int. Cl.: F23C 11/00, B01J 23/10

(54) **COMBUSTION CATALYSTS**
VERBRENNUNGSKATALYSATOREN
CATALYSEURS DE COMBUSTION

(43) Date of publication of application: 30.11.1994
(73) Proprietor: IMPERIAL CHEMICAL INDUSTRIES PLC, London SW1P 3JF (GB)
(72) Inventor: LYWOOD, Warwick John, Yarm, Cleveland TS15 0JT (GB); SHIPLEY, David Graham, Yarm, Cleveland TS15 9JZ (GB); FOWLES, Martin, Danby, North Yorkshire YO21 2JQ (GB)
(74) Representative: Gratwick, Christopher
(86) International application number: GB9200317
(87) International publication number: WO9317277

(56) References cited:
- EP-A- 0 144 094
- DE-A- 1 594 699
- US-A- 472 307

## Description

This invention relates to combustion catalysts, and in particular to catalysts suitable for the combustion of a feedstock with an oxygen-containing gas, eg air, particularly with an excess of the oxygen-containing gas to effect complete combustion.

In order to reduce the formation of oxides of nitrogen (NOx) when a fuel, eg gaseous hydrocarbons such as natural gas and/or hydrogen, is combusted with air, it is desirable to employ fuel/air mixtures of such composition that the adiabatic flame temperature is relatively low, generally below 1500°C, and desirably below about 1300°C. For many applications this means using a composition that is so rich in air that normal combustion is unstable and may not be self-sustaining. Catalytic combustion wherein a mixture of the fuel and air is passed through a bed of a combustion catalyst, enables such problems to be overcome.

One application wherein catalytic combustion is desirable is in gas turbines. At initial start-up of a gas turbine, a mixture of the fuel and air, preheated, for example by a pilot burner, to a temperature typically of the order of 600-800°C when the fuel is methane or natural gas, is fed, normally at superatmospheric pressure, eg at a pressure in the range 2 to 20 bar abs., to the inlet of the combustion catalyst bed. Combustion is effected at the catalyst surface forming a gas stream at elevated temperature. There is a rapid rise in the temperature of the catalyst bed to about the adiabatic flame temperature, typically about 1200°C, when the catalyst lights-off. The point at which this occurs is associated with the pre-heat temperature and the catalyst activity. Before light-off occurs, the solid temperature rises exponentially along the bed length. When the catalyst lights-off, the whole of the catalyst may be at essentially the adiabatic flame temperature. The average temperature of the gas mixture increases more gradually through heat transfer from the solid to the gas phase. The gas temperature rises gradually even when the catalyst is lit-off, ie the catalyst front face is at the adiabatic flame temperature. When the temperature of the gas mixture reaches a value, typically about 900°C, at which homogeneous combustion commences, there is a rapid increase in the gas temperature to about the adiabatic flame temperature. Where, as is usual, the catalyst body is in the form of a monolith with through channels, eg a honeycomb configuration, a higher temperature may be required to achieve homogeneous, ie gas phase, reaction since there is some evidence to suggest that the monolith channels may quench gas phase reactions.

When operating a gas turbine with catalytic combustion, when combustion has been established, it is usually desirable to decrease the preheating of the feed, eg to the temperature, typically about 300-400°C, corresponding to the discharge temperature of the compressor compressing the air and fuel.

It is seen therefore that the catalyst has to exhibit catalytic activity at a relatively low feed temperature but has to withstand heating to relatively high temperatures considerably above 1000°C without loss of that low temperature activity.

Also, in gas turbine operation using catalytic combustion, the catalyst not only has to be able to withstand high temperatures, but also withstand the thermal shock of rapid temperature changes resulting from repeated stopping and starting of combustion. Also gas turbines are usually operated using high gas flow rates. These conditions impose severe restraints on the materials that can be utilised as the catalyst.

Combustion catalyts used under less severe conditions have commonly employed one or more Group VIII metals and/or oxides thereof supported on a suitable refractory support material. Examples of such metals and oxides that have been proposed include platinum group metals, such as platinum or rhodium, or mixtures thereof, or iron, or nickel, in the metal or oxide form. We have found that for applications involving adiabatic flame temperatures above about 1000°C, those catalysts are unsuitable. Thus in order to obtain a satisfactory activity the catalytically active material has to exhibit a high surface area; at the temperatures that are liable to be encountered, the aforementioned catalysts rapidly lose activity as a result of thermal sintering giving a decrease in the surface area and/or as a result of the active material having an appreciable vapour pressure at such temperatures with consequential loss of active material through volatilisation, particularly where the gas stream has a high velocity.

Oxidic compositions containing certain rare-earth oxides, ie the oxides of elements of atomic number 57-71, particularly ceria, have been proposed for catalytic combustion in numerous references, but those compositions generally also contain Group VIII metals as an active component, and so are unsuitable in applications where the Group VIII metal or oxide is liable to sinter and/or volatilise.

The rare earth oxides, ceria, terbia, and praseodymia are ionic oxides having the fluorite structure: this class of oxides also includes stabilised zirconia, and hafnia. Ceria, terbia, and praseodymia have defective structures and can be considered to be oxygen-deficient; terbia and praseodymia being more oxygen-deficient than ceria. It is believed that oxygen-deficient materials give rise to catalytic activity, although ceria by itself has little catalytic combustion activity.

For use as a catalyst, one parameter of importance is its surface area, a high surface area being necessary. Materials of high surface area can be obtained, for example by careful evaporation of a solution of the corresponding nitrates or by precipitation of the oxide, or a precursor thereto. However exposure of high surface area oxidic materials having a high level of oxygen-deficiency to high temperatures results in sintering with consequent loss of surface area and catalytic activity. As a result the more highly oxygen-deficient fluorite oxides, praseodymia and terbia, are not themselves suitable as combustion catalysts.

Certain ionic oxide compositions having the fluorite structure and containing two or more oxides of elements selected from Group IIIa (including the rare earths) or Group IVa of the Periodic Table (as published in the UK "Abridgements of Patent Specifications"), and including one or more oxygen-deficient oxides, give catalysts that have significantly increased activity and that retain an adequate surface area after exposure to high temperatures. Other catalysts comprising mixtures of oxides of Group IIIa and/or Group IVa elements and containing an oxygen-deficient oxide that have a good high temperature stability are described below.

However the low temperature activity of such catalysts is in some cases inadequate, and so their use necessitates relatively high feed temperatures.

We have now realised that certain Group VIII oxides, having relatively good low temperature activity, have a self-limiting ability and can be used in conjunction with the aforesaid compositions containing one or more oxygen-deficient oxide to give a useful catalyst system.

Thus the active species of palladium- and cobalt-containing combustion catalysts are believed to be palladium monoxide (PdO) and cobalto-cobaltic oxide (Co₃O₄) respectively. When subjected to a high enough temperature, approximately 800°C in the case of palladium monoxide and approximately 920°C in the case of cobalto-cobaltic oxide, these oxides lose an atom of oxygen giving metallic palladium and cobaltous oxide (CoO) respectively. By selection of suitable catalyst supports, it may be possible to increase these temperatures. Thus according to the phase diagrams, free palladium is not formed until the temperature exceeds 1050°C when using rare earths such as neodymia or lanthana as supports for palladium monoxide. It is believed that the combustion catalytic activity of palladium metal and cobaltous oxide is much less than the corresponding oxidised species. Thus when the temperature of the catalyst reaches the aforesaid decomposition temperature, the rate of increase of catalytic activity with increasing temperature decreases and so combustion may not be sustained at temperatures above that level. As the temperature drops significantly below the decomposition temperature. the inactive species react with the oxygen-containing gas, giving the catalytically active species again. Consequently combustion catalysts comprising palladium monoxide or cobalto-cobaltic oxide can be made to be self-limiting in the sense that the temperature of the catalyst will not rise, in use, to substantially above said decomposition temperature.

In the present invention this self-limiting ability of palladium monoxide or cobalto-cobaltic oxide combustion catalysts is utilised to provide low temperature partial combustion of a fuel to give a hot, partially combusted, mixture. Combustion of this partially combusted mixture can then be continued using an oxygen-defective, catalyst as aforesaid.

EP-A-144 094 describes a process for the combustion of a combustible mixture comprising a fuel and an oxygen-containing gas comprising passing at least part of said combustible mixture, at an elevated feed temperature, through a first combustion catalyst body wherein the catalyst comprises palladium monoxide and/or cobalto-cobaltic oxide and therein effecting partial combustion of said combustible mixture to give a hot partially combusted mixture and then passing said hot partially combusted mixture, together with the remainder, if any, of said combustible mixture, through a second combustion catalyst body. The present invention relates to such a process wherein the catalyst of the second catalyst body is essentially free from elements, or compounds thereof of Group VIII of the Periodic Table, and comprises an intimate mixture of oxides of at least two elements selected from Groups IIIa and IVa of the Periodic Table, at least one of which oxides is oxygen-deficient.

In the present invention, the elevated feed temperature should be sufficient that combustion of the combustible mixture is sustained in the first combustion catalyst body, and is preferably in the range 250-450°C. Part of the combustible mixture may bypass the first combustion catalyst body for example by employing a bypass arrangement as described in EP-A-491481. The size of the first catalyst body, and the proportion of the combustible mixture passing therethrough should be sufficient to ensure that the hot partially combusted mixture, mixed with any combustible mixture that has bypassed said first catalyst body, has a temperature sufficient that combustion can be sustained in the second catalyst body.

The second catalyst body, ie that containing an oxygen-deficient oxide preferably has the composition described in EP-A-47230. Preferably it includes, of the total number of Group IIIa and IVa element atoms present, a) a total of at least 60% of atoms of at least one element selected from cerium, zirconium, and hafnium, and b) a total of at least 5% of atoms of at least one Group IIIa element other than cerium; provided that a total of at least 5% are atoms of at least one variable valency element selected from titanium, cerium, praseodymium, and terbium; and the elements present include titanium and at least one Group IIIa element, or at least two Group IIIa elements; and the total amount of any cerium and any non-variable valency Group IIIa atoms is at least 5%.

Fluorite structure oxygen-deficient catalysts preferably comprise an intimate mixture of a) ceria, b) praseodymia and/or terbia, and, preferably also c) lanthana. In preferred compositions there are about 0.5 to 2.5 lanthanum atoms for each praseodymium and terbium atom present.

Other catalysts that have a good high temperature activity, although in some cases a lower low temperature activity than the aforementioned ceria based catalysts, include an intimate mixture of oxides of praseodymium, at least one non-variable valency Group IIIa element, and, optionally zirconium, said composition containing a total of 10-50% of praseodymium atoms, 0-45% of zirconium atoms, and 20-90% of said non-variable valency Group IIIa element atoms, said percentages being based upon the total number of praseodymium, zirconium, and non-variable valency Group IIIa element atoms in said intimate mixture.

The intimate mixture is preferably substantially free from other elements, eg Group VIII elements, or compounds thereof. since such compounds tend to lack stability at high temperatures.

The second catalyst body catalyst may be zirconia-free, in which case the proportion of non-variable valency Group IIIa atoms is 50-90% of the total praseodymium and non-variable valency Group IIIa atoms, or may contain zirconia: preferably the compositions contain zirconia in such an amount that the zirconium atoms constitute at least 5% of the total praseodymium, zirconium and non-variable valency Group IIIa atoms. Preferably the proportion of zirconium atoms is less than 30%, and the proportion of non-variable valency Group IIIa atoms is at least 40%, of the total number of zirconium, praseodymium and non-variable valency Group IIIa atoms.

The non-variable valency Group IIIa atoms may be selected from scandium, yttrium, and the rare earth elements other than praseodymium, terbium, and cerium. Preferred non-variable valency Group IIIa elements are yttrium, lanthanum, and neodymium. Mixtures of such non-variable valency Group IIIa elements may be employed. While the presence of variable valency Group IIIa elements such as cerium and terbium, is preferably avoided, we do not preclude the presence of small amounts of such variable valency Group IIIa elements. The proportion of variable valency Group IIIa elements, other than praseodymium, is preferably less than 5% of the total number of zirconium and Group IIIa element (including praseodymium) atoms in the composition.

The catalysts will generally be required in a supported form: a suitable refractory support, eg alumina, mullite, or silicon carbide, preferably in the form of a honeycomb having a plurality of through passages, preferably at least 25 passages per cm of the honeycomb cross sectional area, may be coated with a slurry of the catalyst composition, followed by firing to form an adherent coating. Alternatively the catalyst may itself be formed into the desired shape, eg by extrusion into a honeycomb structure by the process described in GB-A-1385907, particularly using the technique described in EP-A-134138. However in order to provide a catalyst that can withstand the thermal shock that is liable to be encountered in some catalytic combustion applications, eg gas turbines, where the catalyst is to be used in a self-supporting form, it is preferred that it is produced in the form of a ceramic foam, for example by the processes described in GB-A-1537549 and GB-A-2027688. Alternatively the catalyst may be a coating on such a foam made from a suitable support material. In the case of the palladium oxide or cobalt oxide catalyst, the refractory support will generally have a high surface area wash coat secondary support, of eg alumina, zirconia, or a rare earth oxide, on which the palladium or cobalt oxide catalyst is in turn supported.

In the present invention the catalysts are preferably deployed in an arrangemet such that the palladium oxide or cobalt oxide catalyst will not generally be subject to a temperature above about 980°C, so that loss of the Group VIII metal through sintering and/or volatilisation is minimised.

The present invention is illustrated by the following examples.

### Example 1

In a series of experiments the rate constant for the combustion of methane with air at atmospheric pressure was determined for a catalyst consisting of palladium oxide on alumina. The palladium content was 0.5% by weight (expressed as metal). The observed rate constant increased. as would be expected, as the temperature was increased to about 600°C. As the temperature was further increased from about 600°C to 680°C, the measured rate constant remained substantially constant. As the temperature was increased still further, the measured rate constant decreased until the temperature reached about 800°C whereupon it again started to increase with temperature. However the activity subsequently declined as the temperature was further increased, probably through sintering and volatilisation of the palladium. Thus calculations from the vapour pressure data of palladium show that all the above palladium would be lost through volatilisation in about 3-4 months at a temperature of 1000°C. If the effect of the radius of curvature of the palladium particles on the rate of loss through vaporisation is aiso taken into account, the smaller particles, ie those having the greatest surface area per unit weight and hence the greatest catalytic activity per unit weight, would vaporise and/or sinter far more rapidly.

### Example 2

The rate constant was also determined for the combustion of methane with air at atmospheric pressure for a catalyst consisting of a ceria/lanthana/praseodymia composition in the atomic proportions Ce 81.1 : La 10.2 : Pr 8.7. The rate constant increased steadily as the temperature was increased. At temperatures above 960°C, the rate constant was greater than that of the above palladium catalyst at ther same temperatures.

### Example 3

It is thus apparent from the above examples that a catalyst system could be devised wherein the combustion is first effected using the palladium catalyst and then with the rare earth catalyst. An arrangement wherein the rare earth catalyst is employed when the catalyst temperature exceeds the temperature at which the rare earth catalyst is more active than the palladium catalyst is described below.

A first catalyst body is made in the form of an alumina honeycomb having an alumina washcoat impregnated with a palladium compound decomposable on heating to palladium oxide. The amount of palladium compound corresponds to an overall palladium content of 0.5% by weight of the honeycomb. The honeycomb has passages of triangular configuration and a passage wall thickness of 0.3 mm. The passages are of such size that there are 28 passages per cm of the honeycomb cross section. The honeycomb has a length of 60 mm. A second catalyst body is mounted behind the first catalyst body. The second catalyst body is in the form of a honeycomb having a similar configuration but of length 90 mm. The active catalyst of the second catalyst body is the aforementioned ceria/lanthana/praseodymia composition.

It is calculated that, if a natural gas/air mixture of such composition as to give an adiabatic flame temperature of 1200°C is passed through the first catalyst body and then through the second catalyst body at a pressure of 10 bar abs., at a rate of 50 kg per m of the honeycomb cross section, and at an inlet temperature of 350°C, the temperatures of the catalyst and gas will be as follows:

| Distance (mm) from front of first catalyst body | Temperature (°C) | |
|---|---|---|
| | catalyst | gas |
| 0 | 350 | 350 |
| 20 | 930 | 540 |
| 40 | 950 | 650 |
| 60 | 960 | 740 |
| 70 | 990 | 780 |
| 90 | 1050 | 850 |
| 110 | 1090 | 930 |
| 130 | 1170 | 1000 |
| 150 | 1180 | 1090 |

## Claims

1. A process for the combustion of a combustible mixture comprising a fuel and an oxygen-containing gas comprising passing at least part of said combustible mixture, at an elevated feed temperature, through a first combustion catalyst body wherein the catalyst comprises palladium monoxide and/or cobalto-cobaltic oxide and therein effecting partial combustion of said combustible mixture to give a hot partially combusted mixture and then passing said hot partially combusted mixture, together with the remainder, if any, of said combustible mixture, through a second combustion catalyst body wherein the catalyst is essentially free from elements, or compounds thereof, of Group VIII of the Periodic Table, and comprises an intimate mixture of oxides of at least two elements selected from Groups IIIa and IVa of the Periodic Table, at least one of which oxides is oxygen-deficient.

2. A process according to claim 1 wherein the second combustion catalyst is a fluorite structure oxidic composition.

3. A process according to claim 2 wherein the second combustion catalyst includes, of the total number of Group IIIa and IVa element atoms present, a) a total of at least 60% of atoms of at least one element selected from cerium, zirconium, and hafnium, and b) a total of at least 5% of atoms of at least one Group IIIa element other than cerium; provided that a total of at least 5% are atoms of at least one variable valency element selected from titanium, cerium, praseodymium, and terbium; and the elements present include titanium and at least one Group IIIa element, or at least two Group IIIa elements; and the total amount of any cerium and any non-variable valency Group IIIa atoms is at least 5%.

4. A process according to claim 3 wherein the second combustion catalyst comprises an intimate mixture of a) ceria, b) praseodymia and/or terbia.

5. A process according to claim 4 wherein the second catalyst also contains lanthana.

6. A process according to claim 5 wherein there are 0.5 to 2.5 lanthanum atoms for each praseodymium and terbium atom present in the second catalyst.

7. A process according to claim 1 wherein the second catalyst comprises an intimate mixture of oxides of praseodymium, at least one non-variable valency Group IIIa element, and, optionally zirconium, said composition containing a total of 10-50% of praseodymium atoms, 0-45% of zirconium atoms, and 20-90% of said non-variable valency Group IIIa element atoms, said percentages being based upon the total number of praseodymium, zirconium, and non-variable valency Group IIIa element atoms in said intimate mixture.

## Patentansprüche

1. Verfahren zur Verbrennung eines brennbaren Gemisches, das einen Brennstoff und ein sauerstoffhaltiges Gas enthält, umfassend Hindurchführen von mindestens einem Teil des genannten brennbaren Gemisches bei einer erhöhten Speisetemperatur durch einen ersten Verbrennungskatalysatorkörper, wobei der Katalysator Palladiummonoxid und/oder Kobalt (II,III) -oxid umfaßt, und wobei darin eine Verbrennung eines Teils des genannten brennbaren Gemisches durchgeführt wird, wodurch ein heißes, teilweise verbranntes Gemisch entsteht, und dann Hindurchführen des genannten heißen, teilweise verbrannten Gemisches, zusammen mit dem Rest, wenn vorhanden, des genannten brennbaren Gemisches durch einen zweiten Verbrennungskatalysatorkörper, wobei der Katalysator im wesentlichen frei von Elementen der Gruppe VIII des Periodensystems oder deren Verbindungen ist und ein inniges Gemisch von Oxiden von mindestens zwei Elementen, ausgewählt aus den Gruppen IIIa und IVa des Periodensystems umfaßt, wobei mindestens eines der Oxide Sauerstoffmangel aufweist.

2. Verfahren nach Anspruch 1, wobei der zweite Verbrennungskatalysator eine oxidische Zusammensetzung mit Fluoritstruktur ist.

3. Verfahren nach Anspruch 2, wobei der zweite Verbrennungskatalysator von der Gesamtzahl der vorhandenen Atome der Elemente der Gruppen IIIa und IVa a) eine Gesamtmenge von mindestens 60 % von Atomen von mindestens einem Element, ausgewählt aus Cer, Zirkonium und Hafnium und b) eine Gesamtmenge von mindestens 5 % von Atomen von mindestens einem anderen Element der Gruppe IIIa als Cer enthält; mit der Maßgabe, daß eine Gesamtmenge von mindestens 5 % Atome von mindestens einem Element mit variabler Valenz sind, ausgewählt aus Titan, Cer, Praseodymium und Terbium; und daß die vorhandenen Elemente Titan und mindestens ein Element der Gruppe IIIa, oder mindestens zwei Elemente der Gruppe IIIa umfassen; und die Gesamtmenge von jeglichem Cer und jeglichen Atomen der Gruppe IIIa mit nicht-variabler Valenz mindestens 5 % beträgt.

4. Verfahren nach Anspruch 3, wobei der zweite Verbrennungskatalysator ein inniges Gemisch von a) Ceroxid, b) Praseodymiumoxid und/oder Terbiumoxid umfaßt.

5. Verfahren nach Anspruch 4, wobei der zweite Katalysator auch Lanthan(III)-oxid enthält.

6. Verfahren nach Anspruch 5, worin 0,5 bis 2,5 Lanthanatome für jedes Praseodymium- und Terbiumatom vorliegt, das in dem zweiten Katalysator vorhanden ist.

7. Verfahren nach Anspruch 1 wobei der zweite Katalysator ein inniges Gemisch von Oxiden von Praseodymium, mindestens einem Element der Gruppe IIIa mit nicht-variabler Valenz und gegebenenfalls Zirkonium enthält, wobei die genannte Zusammensetzung eine Gesamtmenge von 10 - 50 % Praseodymiumatome, 0 - 45 % Zirkoniumatome und 20 - 90 % der genannten Atome der Elemente der Gruppe IIIa mit nicht-variabler Valenz enthält, wobei die Prozentsätze auf die Gesamtzahl der Praseodymium-, Zirkonium- und Atome der Elemente der Gruppe IIIa mit nicht-variabler Valenz in dem genannten innigen Gemisch bezogen sind.

## Revendications

1. Procédé de combustion d'un mélange combustible comprenant un combustible et un gaz contenant de l'oxygène, comprenant le passage d'au moins une partie du mélange combustible, à une température élevée d'alimentation, au travers d'un premier corps catalytique de combustion, dans lequel le catalyseur comprend du monoxyde de palladium et/ou de l'oxyde cobalto-cobaltique et dans lequel, on réalise la combustion partielle du mélange combustible pour donner un mélange chaud partiellement brûlé et ensuite, le passage du mélange chaud partiellement brûlé en association avec le reste, s'il existe, du mélange combustible, au travers d'un deuxième corps catalytique de combustion, dans lequel le catalyseur est essentiellement exempt d'éléments, ou de composés de ceux-ci, du groupe VIII du tableau périodique et comprend un mélange intime d'oxydes d'au moins deux éléments choisis parmi les groupes IIIa et IVa du tableau périodique, au moins l'un de ces oxydes est déficient en oxygène.

2. Procédé suivant la revendication 1, dans lequel le deuxième catalyseur de combustion est une composition d'oxyde à structure fluorite.

3. Procédé suivant la revendication 2, dans lequel le deuxième catalyseur de combustion comprend, parmi le nombre total d'atomes d'éléments des groupes IIIa et IVa présents, a) un total d'au moins 60% d'atomes d'au moins un élément choisi parmi cérium, zirconium et hafnium, et b) un total d'au moins 5% d'atomes d'au moins un élément du groupe IIIa autre que le cérium; pourvu qu'un total d'au moins 5% sont des atomes d'au moins un élément à valence variable choisi parmi titane, cérium, praséodyme et terbium; et les éléments présents comprennent du titane et au moins un élément du groupe IIIa, ou au moins deux éléments du groupe IIIa; et la quantité totale de tout cérium et de tout atome d'élément du groupe IIIa à valence non variable est d'au moins 5%.

4. Procédé suivant la revendication 3, dans lequel le deuxième catalyseur de combustion comprend un mélange intime de a) oxyde de cérium, b) oxyde de praséodyme et/ou oxyde de terbium.

5. Procédé suivant la revendication 4, dans lequel le deuxième catalyseur comprend également de l'oxyde de lanthane.

6. Procédé suivant la revendication 5, dans lequel il existe 0,5 à 2,5 atomes de lanthane pour chaque atome de praséodyme et chaque atome de terbium présents dans le deuxième catalyseur.

7. Procédé suivant la revendication 1, dans lequel le deuxième catalyseur comprend un mélange intime d'oxydes de praséodyme, d'au moins un élément du groupe IIIa à valence non variable et, facultativement, de zirconium, la composition contenant un total de 10 à 50% d'atomes de praséodyme, de 0 à 45% d'atomes de zirconium et de 20 à 90% d'atomes d'élément du groupe IIIa à valence non variable, les pourcentages étant basés sur le nombre total d'atomes de praséodyme, de zirconium et d'éléments du groupe IIIa à valence non variable dans le mélange intime.
